# EUROPEAN PATENT APPLICATION

(11) **EP 2 165 827 A2**
(43) Date of publication of application: **24.03.2010**
(21) Application number: 09252178.0
(22) Date of filing: 14.09.2009
(51) Int. Cl.: B32B 37/02, B32B 37/24

(54) **Laminate and laminate production apparatus**

(30) Priority: 18.09.2008 JP 2008238862
(71) Applicant: Fujifilm Corporation, Tokyo 106-8620 (JP)
(72) Inventor: Hieda, Toyoaki, Kanagawa 250-0193 (JP)
(74) Representative: Stevens, Jason Paul

(57) **Abstract**

The present invention provides a laminate and a laminate production apparatus capable of preventing dust from attaching to a substrate B during transfer of the substrate B. The laminate production apparatus 20 includes: an A zone including a feeding and taking-up device 22 which feeds a long-length substrate B and takes up a laminate in which an underlying layer 12 and a thin film 14 are formed over the long-length substrate B, and a coating device 24 which applies a coating liquid onto the substrate B to form a coated film; a B zone including a drying device 26 which heat-treats the coated film; and a C zone including a vacuum film forming device 29 which forms the thin film 14 on the underlying layer 12, and a taking-up and feeding device 32 which takes up and feeds the substrate B on which surface the underlying layer 12 is formed.

## Description

### BACKGROUND OF THE INVENTION

### Field of the Invention

The present invention relates to a laminate and to a laminate production apparatus, and more particularly relates to a laminate in which an underlying layer is formed on a substrate and a thin film is formed on the underlying layer by a vacuum film forming method, and to a production apparatus for producing such a laminate.

### Description of the Related Art

A variety of functional films (functional sheets), such as optical films including gas barrier films, protective films, optical filters and reflection preventive films, are utilized for various devices including optical elements; display devices such as liquid crystal displays and organic EL displays; semiconductor devices; and thin-film solar cells.

In production of these functional films, film formation (thin-film formation) by a vacuum film forming method, such as sputtering, and plasma CVD (Chemical Vacuum Deposition) is utilized.

Generally, in order to efficiently form a film by a vacuum film forming method while securing high productivity, a film is continuously formed on a long-length substrate.

One known form of equipment used to carry out such film formation is a so-called roll-to-roll film forming apparatus, where a feed roll around which a long-length substrate (web-formed substrate) is wound and a take-up roll around which a film-formed substrate can be wound are used. In such a roll-to-roll film forming apparatus, a long-length substrate is wound off from the feed roll and on to the take-up roll in a predetermined path where the substrate passes through a film forming chamber, in which a film is formed on the substrate by plasma CVD. A film is continuously formed on the conveyed substrate in the film forming chamber while feeding of the substrate from the feed roll is performed in synchronization with taking-up of the substrate on which the film has been formed by the take-up roll.

Functional films such as a gas barrier film and a protective film are not always formed in a single layer. For instance, functional films (laminated films) are also known in which an organic film containing a polymer as a main component is formed on a substrate such as a plastic film, and an inorganic film formed of an inorganic material is formed on the organic film.

By way of example, there is disclosed in Japanese Patent Application Laid-Open No. 2002-264274 a gas barrier film which comprises a laminate of an organic film formed by curing a composition containing a monomer or oligomer of hexafunctional acrylate or methacrylate, and an inorganic layer of an oxide selected from an aluminum oxide, a silicon oxide, an indium/tin complex oxide, and an indium/cerium complex oxide.

### SUMMARY OF THE INVENTION

In order to produce a laminate in which an underlying layer is formed on a substrate such as a plastic film, and a thin film is formed on the underlying layer by a vacuum film forming method, it is necessary to perform coating under atmospheric pressure and to perform vacuum film formation under vacuum conditions. Therefore, it has been necessary to transfer the substrate from a film forming apparatus for forming an underlying layer under atmospheric pressure to another film forming apparatus capable of forming a thin film under vacuum conditions. Accordingly, there has been a disadvantage that the transfer of the substrate results in adhesion of dust to the substrate.

The present invention has been made in light of the present circumstances. At least the preferred embodiments of the present invention aim to provide a laminate having a thin film formed on an underlying layer and a laminate production apparatus which is capable of preventing dust from attaching to a substrate during transfer of the substrate.

To achieve the above object, according to a first aspect of the present invention, there is provided a laminate production apparatus comprising: a first zone (A zone) comprising a feeding and taking-up device which feeds a long-length substrate from a substrate roll and which takes up a laminate in which an underlying layer and a thin film are formed over the long-length substrate, and a coating device which applies a coating liquid onto the substrate to form a coated film; a second zone (B zone) comprising a drying device which heat-treats the coated film; and a third zone (C zone) comprising a vacuum film forming device which forms the thin film on the underlying layer by a vacuum film forming method, and a taking-up and feeding device which takes up and feeds the long-length substrate on which surface the underlying layer is formed.

According to the first aspect of the present invention, it is possible to provide a laminate production apparatus capable of preventing dust from attaching to a substrate during transfer of the substrate. It should be noted that in the laminate production apparatus, during formation of the underlying layer, all the zones are maintained at about atmospheric pressure, and the long-length substrate is conveyed from the A zone to the B zone, and from the B zone to the C zone, and during formation of the thin film, all the zones are vacuum-drawn to be under reduced pressure, and the long-length substrate is conveyed from the C zone to the B zone, and from the B zone to the A zone, thereby producing a laminate.

Preferably, the coating liquid contains a radiation curable monomer or oligomer, and the C zone further comprises an ultraviolet irradiation device which irradiates the coated film after the heat treatment to cure the coated film and form the underlying layer. Thus, the underlying layer can be formed with the coating liquid containing the radiation curable monomer or oligomer by providing the ultraviolet irradiation device in the C zone.

In a further preferred form, the substrate is conveyed by a plurality of cylindrical rollers with smooth surfaces, and the plurality of rollers convey the substrate such that the surface of the substrate on which the underlying layer or the thin film is not formed is in contact with the plurality of rollers and with a surface of the substrate on which the underlying layer or the thin film is formed faced downward to the ground.

Because the substrate is conveyed by a plurality of rollers in a manner that a surface of the substrate on which the underlying layer or the thin film is not formed is in contact with the plurality of rollers and that a surface of the substrate on which the underlying layer or the thin film is formed faces downward to the ground, there is no need to use air floating rollers. Accordingly, the cost for conveying a substrate can be reduced. Further, it is difficult for dust to become attached to a surface of the substrate on which the underlying layer or the thin film is formed in the laminate production apparatus.

In a further preferred form, during the formation of the underlying layer, cleaning air flows through the C zone from a top portion of the A zone, and during the formation of the thin film, the cleaning air is exhausted from a bottom portion of the C zone. With such an air flow passage, it becomes harder for dust to attach to a surface of the substrate on which the underlying layer or the thin film is formed in the laminate production apparatus.

According to a further aspect of the present invention, there is provided a laminate comprising multi-layers composed of the underlying layer and thin film formed by a laminate production apparatus as described above.

The laminate production apparatus described above can be utilized, in particular, effectively in production of a laminate in which layers composed of an underlying layer and a thin film are formed in a stack.

According to the present invention, it is possible to provide a laminate and a laminate production apparatus each capable of preventing dust from attaching to a substrate during transfer of the substrate.

### BRIEF DESCRIPTION OF THE DRAWINGS

Fig. 1 is a diagram for illustrating a laminated film produced by a laminate production apparatus;
Fig. 2 is a diagram for illustrating the laminate production apparatus; and
Figs. 3A and 3B are diagrams for illustrating how an organic film and an inorganic film are formed in the laminate production apparatus.

### DETAILED DESCRIPTION OF THE PREFERRED EMBODIMENTS

Hereinbelow, the preferred embodiments of the present invention will be described with reference to the accompanying drawings. The present invention will be described with reference to the preferred embodiments described below; however, various modifications may be made by a large number of techniques without departing from the scope of the present invention, and embodiments other than the present embodiments may be utilized. Accordingly, all modifications within the present invention are included within the scope of the appended claims. Also, it should be noted that in the description of the present invention, the numerical range represented by means of "to" means a range including numerical values described before and after the numerical values described in "to".

The following describes a laminate production apparatus according to a preferred embodiment of the present invention. Note that in the following, the substrate for the laminate is a film; however, the laminate of the present invention is not limited to a laminated film, and the substrate for laminate could be a sheet.

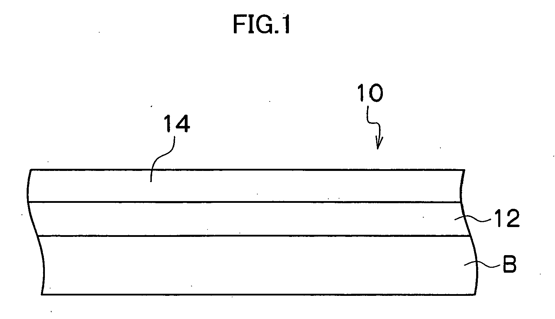

Fig. 1 is a conceptual diagram of a laminated film produced by a laminate production apparatus according to a preferred embodiment of the present invention.

As shown in Fig. 1, the laminate production apparatus produces a laminate (also referred to below as "laminated film") 10, in the following manner. Firstly, an underlying layer 12 containing a predetermined polymer as the main component is formed on a surface of a substrate B (raw fabric film), and then a thin film 14 is formed on the underlying layer 12 by a vacuum film forming method to produce the laminate 10. The laminate production apparatus according to the embodiment of the present invention can also produce a laminate in which built-up layers composed of the underlying layer 12 and thin film 14 are formed in a stack, though this is not shown in the figure.

In the production of a laminate, by way of example, a laminate (laminated film) 10 is produced by an organic film formation step and an inorganic film formation step. In the organic film formation step, an organic film (underlying layer) 12 is formed on a surface of a substrate B, and in the inorganic film formation step, an inorganic film (thin film) 14 is formed on a surface of the organic film 12.

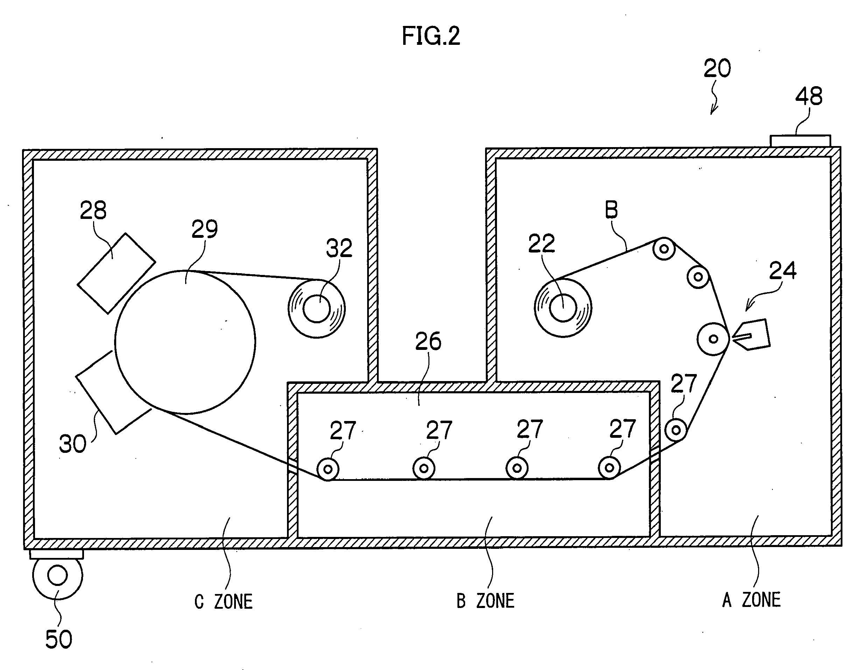

Fig. 2 illustrates a conceptual diagram of an example of the laminate production apparatus 20 according to the embodiment of the present invention.

The laminate production apparatus 20 of the present invention comprises, as illustrated in Fig. 2, three zones (first, second and third zones) referred to as an A zone, a B zone, and a C zone.

The first zone (A zone) is provided with a feeding and taking-up device 22, which can feed a long-length substrate B from a substrate roll, and which can take up a laminate in which an underlying layer 12 and a thin film 14 are formed on the long-length substrate B. The A zone is also provided with a coating device 24 which applies a coating liquid containing a radiation curable monomer or oligomer onto the substrate to form a coated film.

The second zone (B zone) is provided with a drying device 26 which heats the coated film that has been coated by the coating device 24.

The third zone (C zone) is provided with a ultraviolet irradiation device 28 which cures the coated film that has been heated by the drying device 26 by ultraviolet radiation to form the underlying layer, a vacuum film forming device 30 which forms the thin film on the underlying layer by a vacuum film forming method, and a taking-up and feeding device 32 which takes up and feeds the long-length substrate B on which the underlying layer has been formed.

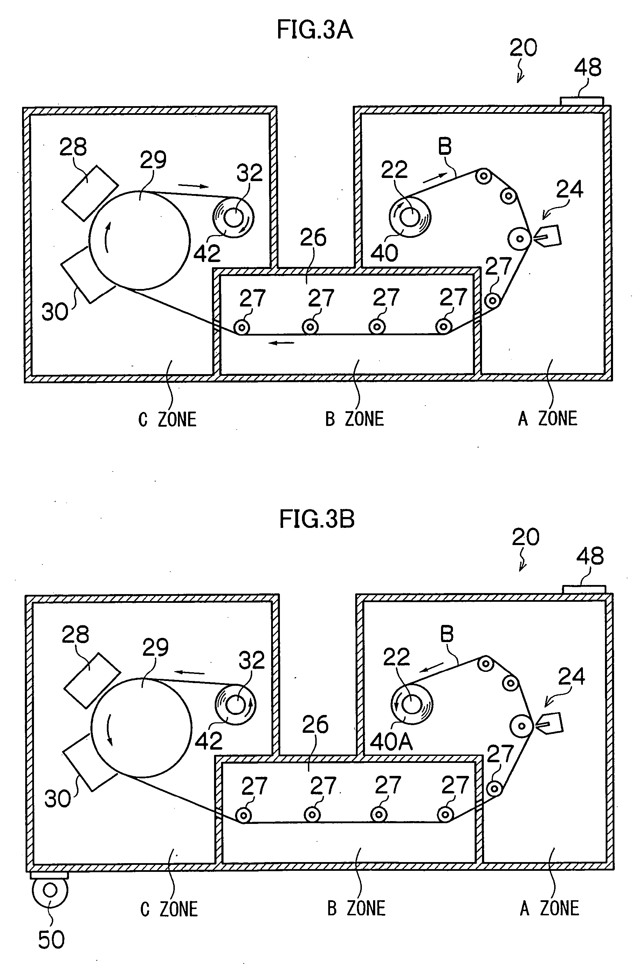

Fig. 3A illustrates how the underlying layer 12 is formed on a surface of the substrate B.

During the formation of the underlying layer 12, all the zones of A zone, B zone and C zone are maintained at about atmospheric pressure, and the long-length substrate B is conveyed from the A zone to the B zone, and then from the B zone to the C zone.

In order to form an organic film, the coating device 24, drying device 26 and ultraviolet irradiation device 28 are used. A coating liquid which has been previously prepared and contains a radiation curable monomer or oligomer is applied onto the substrate B by the coating device 24, dried by the drying device 26 and then polymerized by the ultraviolet irradiation device 28 to form the underlying layer 12.

In the organic film formation, the underlying layer is formed by a roll-to-roll film forming method. The substrate B is loaded, as a substrate roll 40, into the feeding and taking-up device 22, an underlying layer is formed on its surface while it is conveyed in a longitudinal direction, and the substrate B on whose surface the underlying layer is formed is taken up, as a roll 42, by a taking-up and feeding device 32.

The substrate B fed from the substrate roll 40 by the feeding and taking-up device 22 is first conveyed to the coating device 24. In the coating device 24, a surface of the substrate B is coated with a coating liquid which has been previously prepared and which contains a radiation curable monomer or oligomer to be formed as the underlying layer 12. As for the application of the coating liquid, any commonly used liquid coating methods can be employed.

The substrate B is subsequently conveyed to the drying device 26 in the B zone. In the drying device 26, a solvent contained in the coating liquid which has been applied by the coating device 24 is dried. The method of heating of the coating liquid is not particularly limited, and all conventionally known heating means such as heating by a heater and heating by hot air can be used, as long as the means can heat the coating liquid depending on a conveyance speed of the substrate B and so on, before the substrate B reaches the ultraviolet irradiation device 28.

The substrate B is subsequently conveyed to the ultraviolet irradiation device 28 in the C zone. A drum 29 placed in the C zone rotates around a central axis, in a clockwise direction in Fig. 3A.

In the ultraviolet irradiation device 28, the coating liquid which has been applied by the coating device 24 and heated and dried by the drying device 26 is exposed to UV (ultraviolet) rays so as to polymerize the radiation curable monomer or oligomer, thereby forming the underlying layer 12.

During the formation of the underlying layer 12, it is preferable that cleaning air be supplied from an air supplying device 48 positioned at a top portion of the A zone to flow in the direction of the C zone.

Note that when the underlying layer 12 is formed, the vacuum film forming device 30 is not used.

Next, as illustrated in Fig. 3B, while the substrate roll 42 around which the substrate B with the underlying layer 12 formed thereon is wound, being loaded on the taking-up and feeding device 32, the substrate B with the underlying layer 12 formed thereon is fed from the substrate roll 42 by the taking-up and feeding device 32 so that a thin film can be formed thereon.

During the formation of the thin film, all the zones of A zone, B zone and C zone are vacuum-drawn to be under reduced pressure, and the long-length substrate B is conveyed from the C zone to the B zone, and from the B zone to the A zone to produce a laminate according to the embodiment of the present invention. The A zone, B zone and C zone respectively have a vacuum pumping device. Preferably, the C zone has a vacuum pumping device 50 at a bottom portion thereof. For the vacuum pumping device, a conventionally known vacuum pumping device may be used.

Similarly to the formation of the organic film, the formation of an inorganic film is carried out by a roll-to-roll film forming method, in which a substrate B with an underlying layer 12 formed on a surface thereof is fed from a substrate roll 42, a thin film 14 is formed while the substrate being conveyed in a longitudinal direction, and a laminate 10 with the underlying layer 12 and the thin film 14 formed on its surface is then taken up and wound in the form of a roll by a feeding and taking-up device 22.

In the inorganic film formation, the substrate roll 42 which takes up the substrate B on which surface the underlying layer 12 has been formed then undergoes formation of the thin film 14 by a vacuum film forming device 30.

Feeding of the substrate B from the taking-up and feeding device 32 is synchronized with taking-up of the laminate 10 by the feeding and taking-up device 22, and the film formation of the thin film 14 on the substrate B is continuously performed while the long-length substrate B is conveyed in a longitudinal direction in a predetermined conveyance path.

In the C zone, the thin film 14 is formed on the surface of the substrate B (i.e. the surface of the underlying layer 12) using a vacuum film forming method, by a vacuum film forming device 30. When the vacuum film forming device 30 employs film formation by sputtering, plasma CVD or the like, a high-frequency power source, etc. is further provided in the C zone. Drum 29 in the C zone rotates around a central axis in a counterclockwise direction in Fig. 3B.

Also, in the case where film formation is performed by sputtering, plasma CVD or the like, the drum 29 may be grounded so as to function as a counter-electrode, or may be connected to a high-frequency power source.

The vacuum film forming device 30 is a device for forming the thin film (inorganic film) 14 on a surface of the substrate B (more specifically, on a surface of the underlying layer 12) by a vacuum film forming method. In this embodiment, here, the forming method of the inorganic film 14 is not particularly limited, and all conventionally known vacuum film forming methods (vapor-phase deposition methods), such as CVD, plasma CVD, sputtering, vacuum evaporation, and ion-plating may be employed.

The substrate B (i.e., a laminate) with the inorganic film 14 formed on its surface by the vacuum film forming device 30 while being supported and conveyed by the drum 29 is guided along a predetermined path by guide rollers 27 so as to pass through the B zone, and is conveyed to the A zone to be taken up in the form of a roll by the feeding and taking-up device 22.

Note that in the film formation of the thin film (inorganic film) 14, the ultraviolet irradiation device 28, the drying device 26 and the coating device 24 are not used.

A laminate roll 40A which is taken up in the form of a roll can be subjected to film formation of an underlying layer and a thin film, in a similar manner as described above, or can be taken out from the laminate production apparatus 20 of the embodiment to put in use for a subsequent step.

In addition, the guide rollers 27 are preferably cylindrical rollers with smooth surfaces. It is preferable that a plurality of such rollers be set up so that the laminate is conveyed with a rear surface of a film-formed surface (ie the surface on which the film has not been formed) being contact with the plurality of smooth rollers and with the film-formed surface facing downward to the ground. In other words, as illustrated in Fig. 2, by setting the guide rollers 27, the guide rollers 27 can support the rear surface of the substrate B and convey the substrate B without the underlying layer 12 and the thin film 14 being contacted. Further, even if dust attaches to a film-formed surface, it will fall off under the action of gravity. Therefore, it is possible to prevent dust from attaching to the substrate.

As an alternative to the plurality of cylindrical rollers with smooth surfaces, it is possible to use one or more flat rollers to convey the laminate.

As described above, the laminate production apparatus according to the embodiment of the present invention comprises: an A zone comprising a feeding and taking-up device which feeds a long-length substrate from a substrate roll and which takes up a laminate in which an underlying layer and a thin film are formed over the long-length substrate, and a coating device which applies a coating liquid containing a radiation curable monomer or oligomer onto the substrate to form a coated film; a B zone comprising a drying device which heat-treats the coated film; and a C zone comprising a ultraviolet irradiation device which cures the coated film which has been heated by ultraviolet radiation to form the underlying layer, a vacuum film forming device which forms a thin film on an underlying layer by a vacuum film forming method, and a taking-up and feeding device which takes up and feeds the long-length substrate on which surface the underlying layer has been formed. Therefore, the underlying layer and the thin film can be formed in a continuous operation in the production apparatus. Further, the present embodiment can provide a laminate production apparatus capable of preventing dust from attaching to the substrate during transfer of the substrate.

It is preferable that the underlying layer (organic film) 12 has a high degree of smoothness and a high degree of film hardness. The smoothness of the surface of the underlying layer 12 is preferably, as an average surface roughness (Ra) per 10 µm square, 10 nm or less, more preferably 2 nm or less.

The film hardness of the underlying layer (organic film) 12 preferably is a certain degree or higher. The film hardness of the underlying layer 12 is preferably, as an indentation hardness measured by nanoindentation method, 100 N/mm² or higher, more preferably 200 N/mm² or higher. According to pencil hardness specified by JIS (Japanese Industrial Standards), the underlying layer 12 preferably has a pencil hardness of HB or higher, and more preferably has a pencil hardness of H or higher.

In the present embodiment, the substrate B over which the underlying layer 12 and the thin film 14 are formed is not particularly limited, and all various types of substrates (base films) utilized for various types of functional films such as gas barrier film, optical film, and protective film may be used, as long as it can be used for forming the after-mentioned underlying layer 12 and forming the thin film 14 by vacuum film formation, for example, various types of resin films such as PET (polyethylene terephthalate) film, various types of metal sheets such as aluminum sheet.

Also, the substrate B may already have various films, such as a protective film, and an adhesive film, formed on a surface thereof.

The coated film forming the underlying layer (organic film) 12 is a film containing a radiation curable monomer or oligomer as the main component. Specifically, as a monomer or oligomer to be used herein, preferably, it has two or more ethylenically unsaturated double bonds and is a monomer or oligomer which is addition-polymerizable on exposure to light. As such monomers and oligomers, there may be exemplified compounds each having at least one addition-polymerizable ethylenically unsaturated group in its molecule and having a boiling point of 100°C or higher at normal pressure. Specific examples thereof include monofunctional acrylates and monofunctional methacrylates such as polyethylene glycol mono(meth)acrylate, polypropylene glycol mono(meth)acrylate, and phenoxyethyl(meth)acrylate; polyethylene glycol di(meth)acrylate, polypropylene glycol di(meth)acrylate, trimethylolethane triacrylate, trimethylolpropane tri(meth)acrylate, trimethylolpropane diacrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexanediol di(meth)acrylate, trimethylolpropane tri(acryloyloxypropyl) ether, tri(acryloyloxyethyl) isocyanurate, tri(acryloyloxyethyl) cyanurate, and glycerin tri(meth)acrylate; and polyfunctional acrylates and polyfunctional methacrylates such as compounds obtained by adding ethylene oxide or propylene oxide to polyfunctional alcohol (e.g. trimethylolpropane, glycerin, etc.) and then (meth)acrylating the resulting product.

Further, as such monomers and oligomers, there may be exemplified, for example, polyfunctional acrylates and methacrylates such as urethane acrylates described in Japanese Examined Application Publication Nos. 48-41708 and 50-6034, and Japanese Patent Application Laid-Open No. 51-37193; polyester acrylates described in Japanese Patent Application Laid-Open No. 48-64183 and Japanese Examined Application Publication Nos. 49-43191 and 52-30490; and epoxy acrylates which are reaction products between epoxy resin and (meth)acrylic acid.

Among these, preferred are trimethylolpropane tri(meth)acrylate, pentaerythritol tetra(meth)acrylate, dipentaerythritol hexa(meth)acrylate, and dipentaerythritol penta(meth)acrylate.

Besides those described above, there may also be exemplified "polymerizable compound(s) B" described in Japanese Patent Application Laid-Open No. 11-133600 as suitable examples.

As a photopolymerization initiator or photopolymerization initiating system to be used herein, there may be exemplified vicinal polyketaldonyl compounds as disclosed in U.S. Patent No. 2367660, acyloin ether compounds as disclosed in U.S. Patent No. 2448828, aromatic acyloin compounds which are substituted with a hydrocarbon group at the α-position as disclosed in U.S. Patent No. 2722512, polynuclear quinone compounds as disclosed in U.S. Patent Nos. 3046127 and 2951758, a combination of triaryl imidazole dimer and p-aminoketone as disclosed in U.S. Patent No. 3549367, benzothiazole compounds and trihalomethyl-s-triazine compounds as disclosed in Japanese Examined Application Publication No. 51-48516, trihalomethyl-triazine compounds as disclosed in U.S. Patent No. 4239850, trihalomethyl oxadiazole compounds as disclosed in U.S. Patent No. 4212976. Among these, trihalomethyl-s-triazine, trihalomethyl oxadiazole and triaryl imidazole dimer are particularly preferable.

Besides those described above, there may also be exemplified "polymerization initiator(s) C" described in Japanese Patent Application Laid-Open No. 11-133600 as suitable examples. The amount of the photopolymerization initiator relative to the total solid content of the coating liquid is preferably 0.01 % by mass to 20% by mass, more preferably 0.5% by mass to 10% by mass. In the exposure to radiation for polymerization of a liquid crystalline compound, it is preferable to use ultraviolet rays. The amount of radiation energy is preferably 20 mJ/cm² to 50 J/cm², more preferably 100 mJ/cm² to 2,000 mJ/cm². In order to accelerate the photopolymerization reaction, the coating liquid may be exposed to radiation under application of heat.

As a film forming method of the underlying layer 12, conventional solution coating methods are exemplified. Employable solution coating methods are dip coating method, air-knife coating method, curtain coating method, roller coating method, wire bar coating method, gravure coating method, slide coating method or an extrusion coating method using a hopper as described in U.S. Patent No. 2681294.

Note that the acrylate and methacrylate are liable to undergo polymerization inhibition due to oxygen in the air. Thus, in the present embodiment, when they are used for the organic film 12, it is preferable to lower the oxygen concentration or oxygen partial pressure in polymerization. In the case where the oxygen concentration in polymerization is lowered by a nitrogen substitution method, the oxygen concentration is preferably 2% or lower, more preferably 0.5% or lower. In the case where the oxygen partial pressure in polymerization is lowered by a pressure reduction method, the total pressure is preferably 1,000 Pa or lower, more preferably 100 Pa or lower. Especially preferred is UV polymerization with energy irradiation of 2 J/cm² or higher under a reduced pressure of 100 Pa or lower.

In the present embodiment, the rate of polymerization of the monomer is preferably 80% or more, more preferably 85% or more, still more preferably 90% or more. The term "rate of polymerization" herein means the rate of reacted polymerizable groups to the total polymerizable groups (for example, in the case of acrylate or methacrylate, acryloyl groups and methacryloyl groups) in the monomer mixture.

When as a laminated film, a protective film is produced for use in various types of devices or apparatuses such as an organic EL display and a liquid crystal display, a silicon oxide film or the like may be formed as the thin film 14.

Furthermore, when as a laminated film, a light reflection-preventive film, a light reflective film or an optical film for use in various types of filters and the like is produced, a film composed of a material having or exhibiting intended optical properties may be formed as the thin film 14.

Among a variety of films, the present embodiment is most suitably utilized in particular for production of gas barrier film because it is possible to form the thin film 14 which is superior in terms of gas barrier properties because of superior surface smoothness of the organic film 12.

Note that the thin film 14 is not limited to a single layer, and may be a multilayer. When the thin film is formed as a multilayer, the individual layers may be identical to or different from each other.

Hereinabove, a laminate production apparatus according to the present embodiment has been described in detail; however, the present invention is not limited to the embodiments described above. The present invention is intended to cover various modifications and equivalent arrangements included within the spirit and scope of the appended claims. For instance, the above-mentioned embodiments describes the case where the coating liquid contains a radiation curable monomer or oligomer; however, an underlying layer according to the present invention is not limited to the case where the underlying layer coating liquid contains a radiation curable monomer or oligomer, and the underlying layer coating liquid may contain a thermosetting resin. In this case, the ultraviolet irradiation device 28 in the laminate production apparatus 20 illustrated in Figs. 2 and 3 is unnecessary.

## Claims

1. A laminate production apparatus (20) comprising:
a first zone (A zone) comprising a feeding and taking-up device (22) which feeds a long-length substrate (B) from a substrate roll and which takes up a laminate (10) in which an underlying layer (12) and a thin film (14) are formed over the long-length substrate (B), and a coating device which applies a coating liquid onto the substrate (B) to form a coated film;
a second zone (B zone) comprising a drying device (26) which heat-treats the coated film; and
a third zone (C zone) comprising a vacuum film forming device (29) which forms the thin film (14) on the underlying layer (12) by a vacuum film forming method, and a taking-up and feeding device (32) which takes up and feeds the long-length substrate (B) on which surface the underlying layer (12) is formed.

2. The laminate production apparatus (20) according to claim 1, wherein
the coating liquid contains a radiation curable monomer or oligomer, and
the C zone further comprises an ultraviolet irradiation device (28) which irradiates the coated film after the heat treatment to cure the coated film and form the underlying layer (12).

3. The laminate production apparatus (20) according to claim 1 or claim 2, wherein
the substrate (B) is conveyed by a plurality of cylindrical rollers (27) with smooth surfaces, and
the plurality of rollers (27) convey the substrate (B) such that the surface of the substrate (B) on which the underlying layer (12) or the thin film (14) is not formed is in contact with the plurality of rollers (27) and with a surface of the substrate (B) on which the underlying layer (12) or the thin film (14) is formed faced downward to the ground.

4. The laminate production apparatus (20) according to any one of claims 1 to 3, wherein during the formation of the underlying layer (12), cleaning air flows through the C zone from a top portion of the A zone, and during the formation of the thin film (14), the cleaning air is exhausted from a bottom portion of the C zone.

5. A laminate (10) comprising multi-layers composed of the underlying layer (12) and thin film (14) formed by the laminate production apparatus (20) according to any one of claims 1 to 4.
